# EUROPÄISCHE PATENTANMELDUNG

(11) **EP 3 184 835 A1**
(43) Veröffentlichungstag der Anmeldung: **28.06.2017**
(21) Anmeldenummer: 16195061.3
(22) Anmeldetag: 21.10.2016
(51) Int. Cl.: F16C 33/10, F16C 37/00, F16C 32/04, F16C 17/00, F01D 25/12, F01D 25/16, F02C 7/06

(54) **FANGLAGER**

(30) Priorität: 23.12.2015 DE 102015226689
(71) Anmelder: Siemens Aktiengesellschaft, 80333 München (DE)
(72) Erfinder: Haje, Detlef, 02828 Görlitz (DE)

(57) **Zusammenfassung**

Die Erfindung betrifft ein Fanglager (1) für einen durch wenigstens ein aktives Magnetlager (2) gelagerten Rotor (7). Das Fanglager (1) ist dabei als Gleitlager (1) ausgebildet. Das Gleitlager (1) ist so ausgebildet, dass es kontinuierlich oder in Fangbetrieb mittels eines Kühlmittels kühlbar ist. Hierdurch wird ein Aufschmelzen des Gleitlagers (1) und damit eine Zerstörung des Gleitlagers (1) im Falle eines Abwurfes des Rotors (7) verhindert. Die Erfindung betrifft weiter eine Turbomaschine mit einem solchen Fanglager (1) sowie ein Kraftwerk mit einer entsprechenden Turbomaschine.

## Beschreibung

Die Erfindung betrifft ein Fanglager nach dem Oberbegriff des unabhängigen Patentanspruchs 1. Des Weiteren betrifft die Erfindung eine Turbomaschine nach dem nebengeordneten Anspruch 7 und ein Kraftwerk nach dem nebengeordneten Anspruch 10.

Aktive Magnetlager finden vermehrt Einsatz bei der Lagerung von Rotoren bei Maschinen, insbesondere Turbinen, Kompressoren, Motoren und Generatoren. Der wesentliche Vorteil von aktiven Magnetlagern ist die weitgehend reibungsfreie Lagerung des Rotors und die damit verbundene Erhöhung des Wirkungsgrads gegenüber mechanischen Lagerungen. Darüber hinaus ermöglichen die Magnetlager eine ölfreie Lagerung, wodurch die Brandlast im Vergleich zu ölgeschmierten Lagern deutlich reduziert wird.

Ein wesentlicher Nachteil von aktiven Magnetlagern ist jedoch, dass es im Störfall, beispielsweise einem Stromausfall, zu einem Komplettausfall der Magnetlagerung kommen kann. Ein solcher Komplettausfall des Magnetlagers würde während des Betriebs dazu führen, dass der Rotor ungebremst und mit hoher Rotationsgeschwindigkeit auf die Lagerschalen des Magnetlagers auftreffen würde. Dies würde unweigerlich zur Zerstörung des Magnetlagers führen. Aus diesem Grund werden beim Einsatz von aktiven Magnetlagern, so genannte Fanglager vorgesehen, die den Rotor im Falle eines Ausfalls des Magnetlagers auffangen. Als Fanglager werden dabei üblicherweise herkömmliche Wälzlager verwendet. Derzeitig verfügbare Wälzlager stoßen durch hohe Beschleunigungen, Umfangsgeschwindigkeiten und Rotormassen jedoch an ihre Grenzen. Wünschenswert wären daher Fanglager, große Beschleunigung und Umfangsgeschwindigkeiten auch bei großen Rotormassen aufnehmen könnten.

Um größere Rotormassen aufnehmen zu können, werden heute schon Gleitlager als Fanglager verwendet. Diese haben jedoch den Nachteil, dass die Gleitfläche der Lager beim Auftreffen des Rotors in das Lager stark erhitzt wird und dabei teilweise aufgeschmolzen werden kann.

Ausgehend vom zuvor beschriebenen Stand der Technik ist es Aufgabe der vorliegenden Erfindung, ein Fanglager bereitzustellen, welches große Beschleunigung und Umfangsgeschwindigkeiten auch bei großen Rotormassen aufnehmen kann. Weiterhin ist es Aufgabe der Erfindung, eine Turbomaschine mit einem solchen Fanglager bereitzustellen. Darüber hinaus ist es Aufgabe der Erfindung, ein Kraftwerk bereitzustellen, welches eine solche Turbomaschine aufweist.

Die Aufgabe wird hinsichtlich des Fanglagers durch die Merkmale des unabhängigen Patentanspruchs 1 gelöst. Hinsichtlich der Turbomaschine wird die Aufgabe durch die Merkmale des nebengeordneten Patentanspruchs 7 und hinsichtlich des Kraftwerks durch die Merkmale des nebengeordneten Anspruchs 10 gelöst.

Weitere Vorteile und Ausgestaltungen der Erfindung, die einzeln oder in Kombination miteinander einsetzbar sind, sind Gegenstand der Unteransprüche.

Das erfindungsgemäße Fanglager für eine durch wenigstens ein aktives Magnetlager gelagerte Welle, wobei das Fanglager als Gleitlager ausgebildet ist, zeichnet sich dadurch aus, dass das Gleitlager so ausgebildet ist, dass es kontinuierlich oder im Fangbetrieb mittels eines Kühlmittels kühlbar ist. Durch die aktive Kühlung des Fanglagers kommt es bei einem Abwurf des Rotors und dem Auftreffen des Rotors auf das Fanglager nicht zu einer unzulässig hohen Erwärmung und einem nachfolgendem Ausschmelzen der Lagerschalen. Vielmehr wird die Wärme die entsteht wirkungsvoll vom Kühlmittel abgeführt. Hierdurch nimmt die Tragfähigkeit des Fanglagers erheblich zu, wodurch ein sicheres Auffangen und Auslaufen des Rotors im Störfall gewährleistet ist.

Eine Ausgestaltung des Fanglagers sieht vor, dass das Kühlmittel ein flüssiges Kühlmittel, insbesondere Wasser ist. Ein flüssiges Kühlmittel hat den Vorteil, dass es auf Grund seiner höheren spezifischen Wärmekapazität gegenüber einem gasförmigen Kühlmittel eine wesentlich größere Wärmemenge a vom Lager abführen kann. Wasser als Kühlmittel eignet sich insbesondere, da es fast überall und in großen Mengen verfügbar ist und bei manchen Anwendungen, beispielsweise bei Dampfturbinen, als Kondensat im System vorliegt. Darüber hinaus ist Wasser ein günstiges und umweltverträgliches Kühlmittel.

Eine weitere Ausgestaltung der Erfindung sieht vor, dass das als Gleitlager ausgebildete Fanglager als trocken geschmiertes Gleitlager ausgebildet ist und mittels eines geschlossenen Kühlsystems kühlbar ist. Die Trockenschmierung wird dabei zum Beispiel durch Lagerwerkstoffe mit geringem Reibkoeffizienten, beispielsweise Messing-, Bronze-, Weißmetall-Lager oder mittels reibungsvermindernden Zusatzstoffen, wie Graphit, Molybdän, Kupfer, Fett oder Ähnlichem realisiert. Durch das geschlossene Kühlsystem kann die Wärme gezielt abgeführt werden und ein entweichen des Kühlmittel kann verhindert werden.

Eine weitere Ausgestaltung der Erfindung sieht vor, dass das geschlossene Kühlsystem mittels Kühlkanälen, welche im Gleitlager eingebracht sind, ausgebildet ist. Durch das Einbringen von Kühlkanälen im Gleitlager kann die Kühlung exakt in die kritischen Bereiche des Gleitlagers erfolgen. Die Kühlkanäle können dabei unterschiedlich gestaltet sein. Beispielsweise als Ringkanal in den Lagerhälften oder durch Kühlkanäle die sich in Axialrichtung des Rotors erstrecken.

Eine weitere Ausgestaltung der Erfindung sieht vor, dass das Gleitlager eine demontierbare Innenbuchse aufweist. Durch die demontierbare Innenbuchse kann bei einer Beschädigung der Gleitfläche des Gleitlagers die Innenbuchse ausgetauscht und das übrige Fanglager samt Kühlkanälen problemlos weiter verwendet werden. Hierdurch reduzieren sich die Kosten für eine Reparatur des Fanglagers erheblich.

Eine weitere Ausgestaltung der Erfindung sieht vor, dass die Innenbuchse in unmittelbaren Kontakt mit dem Kühlmittel steht. Hierdurch wird eine gute Wärmeleitung gewährleistet. Der unmittelbare Kontakt kann beispielsweise dadurch hergestellt werden, dass im Grundkörper des Fanglagers Nuten ausgebildet sind und durch Einsetzen der demontierbaren Innenbuchse die Innenbuchse mit den Grundkörper die Kühlkanäle ausgebildet.

Durch den Einsatz der erfindungsgemäßen Fanglager wird erstmals der Einsatz von Rotoren mit hoher Rotormasse in Kombination mit Magnetlagern möglich, da im Störfall ein sicheres Auffangen und Auslaufen des Rotors gewährleistet ist. Das erfindungsgemäße Kraftwerk umfassend eine solche Turbomaschine zeichnet sich dadurch aus, dass als Kühlmittel, Kühlwasser aus dem Kondensatsystem des Kraftwerks verwendet werden kann. Durch die Verwendung des Kondensats aus dem Kondensatsystem des Kraftwerks steht immer eine ausreichende Menge an Kühlmittel zur Verfügung, ein Anschluss an das vorhandene Kondensatsystem ist in der Regel problemlos und ohne großen technischen Aufwand realisierbar.

Nachfolgend wird die Erfindung, sowie weitere Vorteile der Erfindung anhand der Figuren erläutert.

Es zeigt:
- Figur 1: einen Axialschnitt durch eine erfindungsgemäße Turbomaschine mit Fanglager,
- Figur 2: eine Detailansicht eines erfindungsgemäßen Fanglagers im Radialschnitt, und
- Figur 3: eine weitere Detailansicht des erfindungsgemäßen Fanglagers im Axialschnitt.

Die Figuren zeigen nur eine schematische und stark vereinfachte Darstellung der Erfindung. Gleiche bzw. funktionsgleiche Bauteile sind figurübergreifend mit den selben Bezugszeichen versehen.

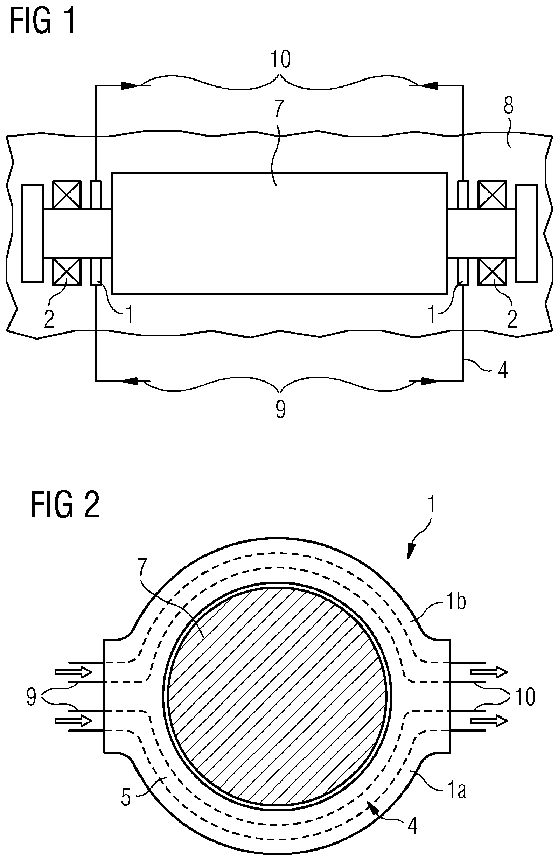

Figur 1 zeigt einen Axialschnitt durch eine Turbomaschine 8, welche in der Figur nur schematisch angedeutet ist. Die Turbomaschine 8 umfasst einen Rotor 7, der mittels zweier Magnetlager 2 gelagert ist. Bei den Magnetlagern 2 handelt es sich um aktive Magnetlager, bei denen mittels eines elektrischen Stromes ein Magnetfeld erzeugt wird, welches den Rotor 7 lagert. Aufgrund der magnetischen Lagerung erfolgt eine weitgehend reibungsfreie und damit verlustfreie Lagerung, wodurch sich eine Wirkungsgradsteigerung der Turbomaschine 8 gegenüber einer Turbomaschine 8 mit mechanisch gelagertem Rotor 7 ergibt. Um bei einem Störfall, beispielsweise einem Stromausfall, ein sicheres Auslaufen und Auffangen des Rotors 7 zu gewährleisten, sind zwei Fanglager 1 vorgesehen. Die Fanglager 1 sind als Gleitlager 1 ausgebildet und können kontinuierlich oder im Fangbetrieb mittels eines Kühlmittels gekühlt werden. Die Kühlung dient dazu, die Wärme, die in Folge von Reibung zwischen dem sich drehendem Rotor 7 und dem stehenden Gleitlager 1 entsteht, abzuführen, und so ein Aufschmelzen des Gleitlagers 1 und damit einer Zerstörung des Gleitlagers 1 wirkungsvoll zu verhindern. Als Kühlmittel findet ein flüssiges Kühlmittel Anwendung, da dieses gegenüber einem gasförmigem Kühlmitteln einen höheren spezifischen Wärmekoeffizienten besitzt und somit in kürzerer Zeit größere Wärmemengen abführbar sind. Als Kühlmittel eignet sich dabei insbesondere Wasser. Bei Turbomaschinen, die in Kraftwerken eingesetzt werden, kann dabei vorzugsweise Kühlwasser aus dem Kondensatsystem des Kraftwerks verwendet werden. Dieses ist in hinreichender Menge vorhanden, insbesondere wenn es sich bei der Turbomaschine um eine Dampfturbine handelt. Der Anschluss an das vorhandene Kondensatsystem des Kraftwerks ist dabei auf einfache Weise möglich.

Figur 2 zeigt eine Detailansicht eines erfindungsgemäßen Fanglagers 1 im Radialschnitt. Das Fanglager 1 ist als Gleitlager 1 ausgebildet und umfasst im Ausführungsbeispiel eine obere und eine untere Gleitlagerhälfte 1a, 1b. Das Gleitlager 1 ist als trockengeschmiertes Gleitlager 1 ausgebildet, und kann auf der Innenseite mit einem reibungsverminderten Zusatzstoff wie Graphit, Molybdän, Kupfer, Fett oder Ähnlichem beschichtet sein. Das Lager selbst kann aus einem Werkstoff mit einem geringen Reibkoeffizienten ausgebildet sein, beispielsweise mit einer Messing-, Bronze-, Weißmetall-Legierung. In den beiden Lagerhälften 1a, 1b sind Kühlkanäle 5 ausgebildet. Die Kühlkanäle 5 sind Teil eines geschlossenes Kühlsystems 4. Mittels des geschlossenen Kühlsystems 4 kann das Gleitlager 1 kontinuierlich oder im Fangbetrieb gekühlt werden. Die Kühlkanäle 5 sind im Ausführungsbeispiel ringförmig in den jeweiligen Lagerschalen eingebracht und verfügen jeweils über einen eigenen Zu- und Ablauf 9, 10. Grundsätzlich lassen sich Kühlkanäle 5 in den unterschiedlichsten Ausgestaltungen im Gleitlager 1 einbringen. So können die Kühlkanäle 5 beispielsweise auch parallel zur Rotorachse ausgeordnet sein. Auch ist es möglich, die Kühlkanäle 5 nur in thermisch besonders gefährdeten Bereichen des Gleitlagers 1 auszubilden, beispielsweise lediglich in der unteren Lagerschale 1a des Gleitlagers 1. Als Kühlmittel kommt jedes flüssige Kühlmittel in Betracht, wobei sich bei einer Turbomaschine, welche sich im Kraftwerkeinsatz befindet, insbesondere Kühlwasser aus einem vorhandenen Kondensationssystem des Kraftwerks eignet. Um eine hinreichend große Wassermenge bereitstellen zu können, kann eine Flüssigkeitspumpe vorgesehen werden, die entsprechend des Wärmeeintrags eine mehr oder weniger große Menge Kühlflüssigkeit durch die Kühlkanäle 5 pumpt.

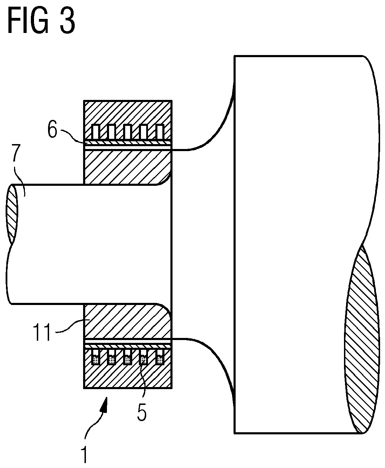

Figur 3 zeigt eine weitere Detailansicht eines erfindungsgemäßen Fanglagers 1 im Axialschnitt. Der Rotor 7, der vom Fanglager 1 im Falle eines Abwurfes aufgfangen wird, weist im Bereich des Fanglagers 1 eine demontierbare Buchse 11 auf. Die Buchse 11 lässt sich nach einem Abwurf leicht austauschen, so dass etwaige Verformungen oder etwaiger Verschleiß auf ein demontierbares Bauteil beschränkt werden und der eigentliche Rotor 7 unbeschadet bleibt. Darüber hinaus weist das Gleitlager 1 eine demontierbare Innenbuchse 6 auf, die ebenfalls leicht austauschbar ist und bei einer Verformung oder einen etwaigen Verschleiß leicht auszutauschen ist. Hierdurch kann auf einen Austausch des gesamten Fanglagers 1 verzichtet werden, wodurch die Kosten im Falle einer Reparatur deutlich geringer ausfallen. Die Kühlkanäle 5 sind vorzugsweise so ausgebildet, dass das Kühlmittel in unmittelbarem Kontakt mit der Innenbuchse 6 steht, so dass ein guter Wärmeübergang von der Innenbuchse 6 auf das Kühlmittel gewährleistet ist. Hierzu können beispielsweise Nuten in das Gleitlager 1 eingebracht werden, die beim Einschieben der Innenbuchse 6 mit dieser die geschlossenen Kühlkanäle 5 bilden. Durch ein kontinuierliches oder bedarfsgerechte Aufsprühen von Kühlmitteln auf den Rotor 7 und/oder das Fanglager 1 kann der Bereich des Fanglagers 1 zusätzlich gekühlt werden.

Zusammenfassend lässt sich festhalten, dass das erfindungsgemäße Fanglager sowie die erfindungsgemäße Turbomaschine und das erfindungsgemäße Kraftwerk mit einer solchen Turbomaschine erstmals den sicheren Einsatz von Rotoren mit großer Masse in Kombination mit magnetgelagerten Lagern ermöglichen. Bei einem Ausfall der Magnetlager wird ein sicheres Auslaufen des Rotors gewährt, ohne dass es zur vollständigen Zerstörung des Fanglagers kommt. Leichte Beschädigungen oder leichter Verschleiß aufgrund des Abwurfes können durch die vorgesehenen Maßnahmen, nämlich die demontierbare Innenbuchse bzw. die demontierbare Buchse auf dem Rotor leicht und mit geringen Kosten repariert werden.

## Patentansprüche

1. Fanglager (1) für einen durch wenigstens ein aktives Magnetlager (2) gelagerten Rotor (7), wobei das Fanglager (1) als Gleitlager (1) ausgebildet ist,
**dadurch gekennzeichnet, dass**
das Gleitlager (1) so ausgebildet ist, dass es kontinuierlich oder im Fangbetrieb mittels eines Kühlmittels kühlbar ist.

2. Fanglager (1) nach Anspruch 1,
**dadurch gekennzeichnet, dass**
das Kühlmittel ein flüssiges Kühlmittel, insbesondere Wasser ist.

3. Fanglager (1) nach Anspruch 1 oder 2,
**dadurch gekennzeichnet, dass**
das Gleitlager (1) als trockengeschmiertes Gleitlager (1) ausgebildet ist und mittels eines geschlossenen Kühlsystems (4) kühlbar ist.

4. Fanglager (1) nach Anspruch 3,
**dadurch gekennzeichnet, dass**
das geschlossene Kühlsystem (4) mittels Kühlkanälen (5) welche im Gleitlager (1) eingebracht
sind, ausgebildet ist.

5. Fanglager (1) nach einem der vorherigen Ansprüche,
**dadurch gekennzeichnet, dass**
das Gleitlager (1) eine demontierbare Innenbuchse (6) aufweist.

6. Fanglager (1) nach Anspruch 3,
**dadurch gekennzeichnet, dass**
die Innenbuchse (6) in unmittelbaren Kontakt mit dem Kühlmittel steht.

7. Turbomaschine, umfassend einen Rotor (7), der mittels wenigstens eines aktiven Magnetlager (2) gelagert ist, wobei für den Ausfall des Magnetlagers (2) ein Fanglager (1) nach einem der vorherigen Ansprüche vorgesehen ist.

8. Turbomaschine nach Anspruch 7,
**dadurch gekennzeichnet, dass**
der Rotor (7) und/oder das Fanglager (1) kontinuierlich oder im Fangbetrieb durch aufsprühen eines Kühlmittels zumindest im Bereich des Fanglagers (1) kühlbar ist.

9. Turbomaschine nach Anspruch 7 oder 8,
**dadurch gekennzeichnet, dass**
der Rotor (7) zumindest im Bereich der Fanglager (1) eine demontierbare Buchse (8) aufweist.

10. Kraftwerk umfassend ein Turbomaschine nach einem der Ansprüche 7 bis 9,
**dadurch gekennzeichnet, dass**
das als Kühlmittel, Kühlwasser aus dem Kondensatsystem des Kraftwerks verwendet wird.

## Geänderte Patentansprüche

### Geänderte Patentansprüche gemäss Regel 137(2) EPÜ.

1. Fanglager (1) für einen durch wenigstens ein aktives Magnetlager (2) gelagerten Rotor (7), wobei das Fanglager (1) als Gleitlager (1) ausgebildet ist, wobei
das Gleitlager (1) so ausgebildet ist, dass es kontinuierlich oder im Fangbetrieb mittels eines Kühlmittels kühlbar ist
**dadurch gekennzeichnet, dass**
das Gleitlager (1) als trockengeschmiertes Gleitlager (1) ausgebildet ist und mittels eines geschlossenen Kühlsystems (4) kühlbar ist, wobei das geschlossene Kühlsystem (4) mittels Kühlkanälen (5) welche im Gleitlager (1) eingebracht
sind, ausgebildet ist.

2. Fanglager (1) nach Anspruch 1,
**dadurch gekennzeichnet, dass**
das Kühlmittel ein flüssiges Kühlmittel, insbesondere Wasser ist.

3. Fanglager (1) nach einem der vorherigen Ansprüche,
**dadurch gekennzeichnet, dass**
das Gleitlager (1) eine demontierbare Innenbuchse (6) aufweist.

4. Fanglager (1) nach Anspruch 3,
**dadurch gekennzeichnet, dass**
die Innenbuchse (6) in unmittelbaren Kontakt mit dem Kühlmittel steht.

5. Turbomaschine, umfassend einen Rotor (7), der mittels wenigstens eines aktiven Magnetlager (2) gelagert ist, wobei für den Ausfall des Magnetlagers (2) ein Fanglager (1) nach einem der vorherigen Ansprüche vorgesehen ist.

6. Turbomaschine nach Anspruch 5,
**dadurch gekennzeichnet, dass**
der Rotor (7) und/oder das Fanglager (1) kontinuierlich oder im Fangbetrieb durch aufsprühen eines Kühlmittels zumindest im Bereich des Fanglagers (1) kühlbar ist.

7. Turbomaschine nach Anspruch 5 oder 6,
**dadurch gekennzeichnet, dass**
der Rotor (7) zumindest im Bereich der Fanglager (1) eine demontierbare Buchse (8) aufweist.

8. Kraftwerk umfassend ein Turbomaschine nach einem der Ansprüche 5 bis 7,
**dadurch gekennzeichnet, dass**
das als Kühlmittel, Kühlwasser aus dem Kondensatsystem des Kraftwerks verwendet wird.
